# EUROPÄISCHE PATENTSCHRIFT

(11) **EP 1 738 179 B1**
(45) Veröffentlichungstag und Bekanntmachung des Hinweises auf die Patenterteilung: **24.10.2007**
(21) Anmeldenummer: 05714752.2
(22) Anmeldetag: 18.04.2005
(51) Int. Cl.: G01N 35/10, B25J 9/10

(54) **VORRICHTUNG FÜR DAS TRANSPORTIEREN ODER UNTERSUCHEN VON FLÜSSIGKEITEN**
DEVICE FOR CONVEYING OR EXAMINING LIQUIDS
DISPOSITIF POUR TRANSPORTER OU EXAMINER DES LIQUIDES

(30) Priorität: 20.04.2004 CH 681042004
(43) Veröffentlichungstag der Anmeldung: 03.01.2007
(73) Patentinhaber: Tecan Trading AG, 8708 Männedorf (CH)
(72) Erfinder: JOST, Friedrich, CH-6300 Zug (CH)
(74) Vertreter: OK pat AG
(86) Internationale Anmeldenummer: PCT/CH2005/000214
(87) Internationale Veröffentlichungsnummer: WO 2005/103725

(56) Entgegenhaltungen:
- EP-A- 0 206 945
- EP-A- 0 555 739
- EP-A- 0 994 356
- DE-C- 10 116 642
- US-A- 4 544 889
- US-A1- 2002 013 667

## Beschreibung

Die Erfindung betrifft gemäss dem Oberbegriff des unabhängigen Anspruchs 1 eine Vorrichtung für das Transportieren oder Untersuchen von Flüssigkeiten in einem System zum Arbeiten mit Flüssigkeitsproben. Solche System umfassen beispielsweise ein im wesentlichen horizontales, sich in einer X-Richtung und in einer dazu rechtwinkligen Y-Richtung ausdehnendes Arbeitsfeld. Die Vorrichtung umfasst zumindest ein Funktionselement mit wenigstens einem funktionellen Ende, wobei die Funktionselemente im wesentlichen senkrecht zum Arbeitsfeld in einer Z-Richtung ausgerichtet sind. Die Vorrichtung umfasst zumindest eine Kippeinheit zum kippbaren Halten des zumindest einen Funktionselements. Vorzugsweise umfasst ein solches System zumindest Robotarm, an welchem zumindest eine erfindungsgemässe Vorrichtung befestigt ist. Ein solcher Robotarm ist dann zum Bewegen des Funktionselements in zumindest einem Teilbereich des Arbeitsfelds und zumindest in der Z-Richtung ausgebildet.

Im technischen Gebiet des Liquid-Handlings sind Vorrichtungen zum Aufnehmen und Abgeben von Flüssigkeitsproben als Pipetten oder Pipetiergeräte bekannt. Vorrichtungen, die lediglich zum Abgeben von Flüssigkeitsproben verwendet werden können, nennt man üblicherweise Dispenser. Zum Automatisieren des Pipetierprozesses von Volumina unterhalb 10 µl müssen zwei Vorgänge voneinander unterschieden werden: Die definierte Aufnahme (Aspiration) und die anschliessende Abgabe (Dispensierung) von Flüssigkeitsproben. Zwischen diesen Vorgängen wird üblicherweise die Pipettenspitze vom Experimentator oder einem Automaten bewegt, so dass der Aufnahmeort einer Flüssigkeitsprobe von deren Abgabeort oft verschieden ist. Für die Richtigkeit und Reproduzierbarkeit einer Aufnahme und/oder Abgabe ist nur das Flüssigkeitssystem wesentlich, welches aus Pumpe (z.B. ein als Spritzenpumpe ausgebildeter Diluter), Flüssigkeitsleitung und Endstück (Pipettenspitze) besteht.

Das Abgeben einer Flüssigkeit mit einer Pipettenspitze kann aus der Luft ("From Air") oder über das Berühren einer Oberfläche geschehen. Diese Oberfläche kann die feste Oberfläche eines Gefässes ("on Tip Touch") sein, in welches die Flüssigkeitsprobe abgegeben werden soll. Es kann auch die Oberfläche einer sich in diesem Gefäss befindlichen Flüssigkeit ("on Liquid Surface") sein. Ein an das Dispensieren anschliessender Mischvorgang ist - besonders bei sehr kleinen Probenvolumina im Nano- oder gar Picoliter-Bereich zu empfehlen, damit eine gleichmässige Verteilung des Probenvolumens in einer Reaktionsflüssigkeit gewährleistet ist.

Wegwerfspitzen bzw. abwerfbare Pipettenspitzen reduzieren wesentlich die Gefahr eines ungewollten Übertragens von Probenteilen in ein Gefäss (Kontamination). Bekannt sind einfache Wegwerfspitzen (sogenannte "Air-Displacement Tips"), deren Geometrie und Material für das reproduzierbare Aufnehmen und/oder Abgeben von sehr kleinen Volumina optimiert ist. Die Verwendung von sogenannten "Positive-Displacement Tips", welche an ihrer Innenseite einen Pumpkolben aufweisen, ist ebenfalls bekannt.

Arbeitsplattformen oder Systeme zum Behandeln von Flüssigkeiten, wie zum Beispiel das Pipettieren von Flüssigkeiten aus Behältern sind z.B. aus US 5,084,242 bekannt. Des weiteren sind z.B. aus DE 101 16 642 und EP 0 206 945 Vorrichtungen bekannt, mit welchen Flüssigkeiten in die Wells einer Mikroplatte abgegeben oder aus solchen Behältern pipettiert werden können. Insbesondere aus US 5,084,242 ist ein System mit gattungsgemässen Vorrichtungen bekannt, mit welchen die Behälter und ein diese Vorrichtung tragender Robotarm so zueinander piatziert werden können, dass das Liquid-Handling automatisiert und reproduzierbar abläuft. Allen bekannten Vorrichtungen und Systemen ist gemeinsam, dass die Pipettenspitzen oder Dispenserspitzen nur in Abhängigkeit der geometrischen Achsen der Systeme bzw. der eingesetzten Roboter bewegt werden können.

Die Aufgabe der vorliegenden Erfindung betrifft das Bereitstellen einer alternativen Vorrichtung bzw. eines Verfahrens, mit welchen Pipettenspitzen oder andere, längliche, dünne Objekte zum Transportieren oder Untersuchen von Flüssigkeiten, ob sie an einem Robotarm befestigt sind oder nicht, unabhängig von den geometrischen Achsen eines Systems zum Arbeiten mit Flüssigkeitsproben und unabhängig von den Bewegungsachsen eines in einem solchen System verwendeten Roboters, ausgerichtet werden können.

Diese Aufgabe wird gemäss dem kennzeichnenden Teil des unabhängigen Anspruchs 1 dadurch gelöst, dass die Kippeinheit einer eingangs beschriebene Vorrichtung Aktuatoren zum individuellen Ausrichten der funktionellen Enden dieser Funktionselemente in Bezug auf eine senkrecht zum Arbeitsfeld stehende Z-Achse und eine Steuereinheit zum elektrischen Ansteuern dieser Aktuatoren umfasst, wodurch jedes der Funktionselemente individuell und von den X- und Y-Ausrichtungen des Arbeitsfeldes unabhängig kippbar ausgebildet ist. Zusätzliche, bevorzugte erfinderische Merkmale ergeben sich aus den abhängigen Ansprüchen.

### Die Vorteile der Erfindung umfassen den folgenden Sachverhalt:

Es hat sich gezeigt, dass die Genauigkeit, mit der z.B. eine Pipettenspitze an einem Ort auf einer marktüblichen Arbeitsplattform automatisiert positionierbar ist, nicht ausreicht um die Wells einer Mikroplatte mit 1536 Wells routinemässig präzise anzufahren. Insbesondere beim Verwenden von mehreren, entlang einer Linie angeordneten Pipettenspitzen machen sich auch geringste Verdrehungen der zumindest auf einem Teilbereich des Arbeitsfelds positionierbaren Mikroplatten gegenüber dem Koordinatensystem des Robotarms bemerkbar. Diese Verdrehungen oder Abweichungen von der Idealposition betreffen im ungünstigsten Fall Werte auf der X-, Y- und Z-Achse. Bei einer zu grossen Fehlertoleranz besteht die Gefahr, dass eine oder mehrere Pipettenspitzen, Temperaturfühler bzw. pH-Sonden, oder ein anderes, längliches, dünnes Objekt, das in einem Well positioniert werden soll, durch ein Anstossen an die Wände des Wells bzw. die Oberfläche der Mikroplatte beschädigt wird. Zudem besteht bei einem unsanften Zusammenstoss eines solchen Objekts mit der Mikroplattenoberfläche die Gefahr eines Probenverlustes, einer Kontaminierung der Nachbarproben und des Arbeitsplatzes. Ein präzises Anfahren der Wells, bei dem keine Gefahr einer ungewollten Berührung von Teilen der Mikroplatte besteht, ist deshalb eine Grundvoraussetzung für ein routinemässiges Arbeiten mit einem Liquid-Handling-System, das z.B. zum automatischen Untersuchen von Blutproben eingesetzt werden kann. Die erfindungsgemässe Vorrichtung ermöglicht das Korrigieren der individuellen Positionen der Pipettenspitzen unabhängig von den Bewegungsachsen des Pipetierroboters, so dass sich das Bewegungssystem des Roboters und das erfindungsgemässe Bewegungssystem der Pipettenspitze ergänzen.

Die erfindungsgemässe Vorrichtung wird nun an Hand von schematischen, den Umfang der Erfindung nicht beschränkenden Zeichnungen von beispielhaften Ausführungsformen im Detail erläutert. Dabei zeigen:
- Fig. 1: ein 3D-Schema einer in ein Liquid-Handling System eingebauten Vorrichtung, gemäss einer ersten Ausführungsform;
- Fig. 2: ein 3D-Schema einer in ein Liquid-Handling System eingebauten Vorrichtung, gemäss einer zweiten Ausführungsform;
- Fig. 3A: einen vertikalen Teilschnitt der in ein Liquid-Handling System eingebauten Vorrichtung, gemäss der ersten Ausführungsform in Fig. 1;
- Fig. 3B: vertikale Teilschnitte der in ein Liquid-Handling System eingebauten Vorrichtung, gemäss der zweiten Ausführungsform in Fig. 2;
- Fig. 4A: einen vertikalen Teilschnitt einer in ein Liquid-Handling System eingebauten Vorrichtung, gemäss einer dritten Ausführungsform;
- Fig. 4B: einen vertikalen Teilschnitt einer in ein Liquid-Handling System eingebauten Vorrichtung, gemäss einer vierten Ausführungsform;
- Fig. 5A: zwei Grundrissschemen von erfindungsgemässen Kippeinheiten;
- Fig. 5B: eine erste Variante eines Grundrissschemas einer Vierereinheit von erfindungsgemässen Kippeinheiten;
- Fig. 5C: eine zweite Variante eines Grundrissschemas einer Vierereinheit von erfindungsgemässen Kippeinheiten;
- Fig. 6A: eine schematische Draufsicht auf einen Robotarm mit einer Zweiereinheit von erfindungsgemässen Kippeinheiten;
- Fig. 6B: eine schematische Draufsicht auf einen Robotarm mit einer Vierereinheit von erfindungsgemässen Kippeinheiten, gemäss Fig. 5B;
- Fig. 6C: eine schematische Draufsicht auf einen Robotarm mit einer Vierereinheit von erfindungsgemässen Kippeinheiten, gemäss Fig. 5C;
- Fig. 7: eine schematische Draufsicht auf einen Robotarm mit zwei Vierereinheiten von erfindungsgemässen Kippeinheiten gemäss Fig. 5C sowie eine Draufsicht auf eine Mikroplatte mit 384 Wells;
- Fig. 8: eine schematische Draufsicht auf zwei Robotarme mit je zwei Vierereinheiten von erfindungsgemässen Kippeinheiten gemäss Fig. 5C sowie eine Draufsicht auf eine Arbeitsfläche mit einer geometrischen Anordnung der Proben.

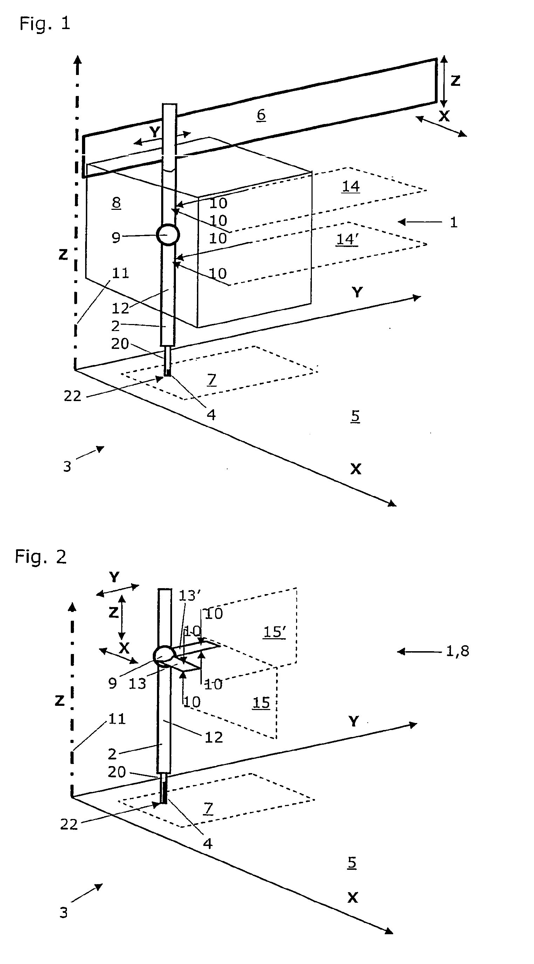

Figur 1 zeigt eine Vorrichtung 1 für das Transportieren oder Untersuchen von Flüssigkeiten in einem System 3 zum Arbeiten mit Flüssigkeitsproben 4. Das System 3 ist hier als robotisiertes Probenbearbeitungsgerät oder als "ROBOTIC SAMPLE PROCESSOR" (RSP) ausgebildet und umfasst ein im wesentlichen horizontales Arbeitsfeld 5 sowie zumindest einen Robotarm 6 mit einer zugeordneten Steuerung. Grundsätzlich kann das Arbeitsfeld jede Form aufweisen; bevorzugt ist eine runde Form, besonders bevorzugt ist eine rechteckige Form des Arbeitsfeldes oder auch Arbeitstisches.

Der Robotarm 6 umfasst zudem zumindest ein im wesentlichen senkrecht zum Arbeitsfeld 5 in einer Z-Richtung ausgerichtetes Funktionselement 2. Im Zusammenhang mit der vorliegenden Erfindung werden längliche Gebilde zur Probenbearbeitung, Probenanalyse oder zum Probentransport, wie Pipetten- bzw. Dispenser-Spitzen 20 oder Fühler 21, wie pH-Sonden, Temperaturfühler und dergleichen als Funktionselemente 2 bezeichnet. Ebenfalls als Funktionselement 2 bezeichnet werden z.B. Mehrfachpipettenspitzen oder Kämme.

Der Robotarm 6 ist zum Bewegen des Funktionselements 2 in zumindest einem Teilbereich 7 des Arbeitsfelds 5 und zumindest in der Z-Richtung ausgebildet. Als ein Teilbereich des Arbeitsfeldes kann ein einzelner Probenträger, wie z.B. ein Probenröhrchen oder eine Mikroplatte mit z.B. 96, 385 oder 1536 Wells bezeichnet werden. Vorzugsweise umfasst der Teilbereich 7 des Arbeitsfeldes 5 mehrere solche Probenträger sowie Aufnahme- und Abwurfstellen für Wegwerfpipettenspitzen. Speziell bevorzugt gehören Kalibrierstationen (z.B. für pH-Sonden), Waschstellen, Abfallsammelstellen und ähnliche logistisch notwendige Servicestellen ebenfalls zum erreichbaren Teilbereich 7 des Arbeitsfeldes 5.

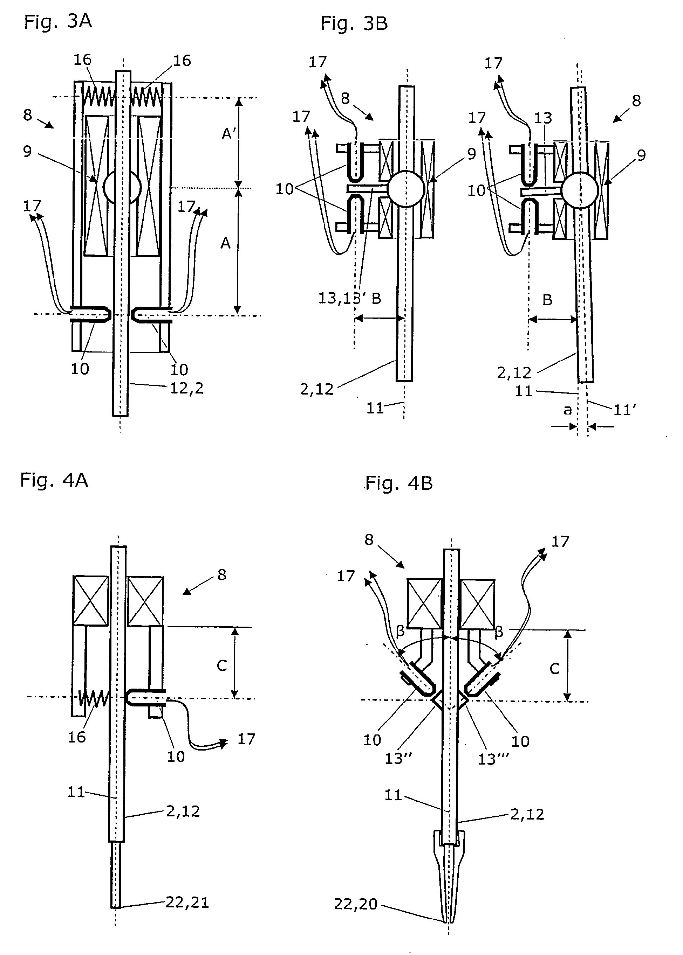

Die erfindungsgemäss Vorrichtung 1 umfasst zumindest eine am Robotarm 6 bewegliche Kippeinheit 8 zum kippbaren Halten des zumindest einen Funktionselements 2. Dabei spielt das funktionelle Ende 22 des Funktionselements (z.B. die Pipettenspitze bzw. die Pipettenspitzen einer Mehrfachpipette oder die Fühlerspitze einer Sonde) eine wesentliche Rolle. Dies deshalb, weil die erfindungsgemässe Vorrichtung 1 Aktuatoren 10 umfasst, welche zum Ausrichten dieser funktionellen Enden 22 der Funktionselemente 2 in Bezug auf eine senkrecht zum Arbeitsfeld 5 stehende Z-Achse 11 ausgebildet sind (vgl. Fig. 3B).

Als Aktuatoren 10 werden im Zusammenhang mit der vorliegenden Erfindung aktive Elemente mit variabler Gösse bzw. Ausdehnung bezeichnet. Solche Aktuatoren 10 sind vorzugsweise als Piezoelemente ausgebildet, die sich entsprechend einer angelegten elektrischen Spannung ausdehnen oder zusammenziehen. Speziell bevorzugt sind dabei sogenannte Piezostapel, weil diese ein Mehrfaches der Ausdehnung ermöglichen. Als Aktuatoren 10 kommen aber auch durch Temperaturänderung kontrahier- bzw. expandierbare Elemente, wie z.B. Bimetalle, in Frage. In der einfachsten Form können die Aktuatoren 10 in als Schrauben zur manuellen Bedienung ausgebildet sein.

Gemäss einer ersten Ausführungsform der erfindungsgemässen Vorrichtung 1 (vgl. Figuren 1, 3A und 4A) sind solche Aktuatoren 10 einer Kippeinheit 8 so ausgebildet, dass sie direkt auf einen Schaft 12 des Funktionselements 2 einwirken.

Gemäss einer zweiten Ausführungsform der erfindungsgemässen Vorrichtung 1 (vgl. Figuren 2, 3B und 4B) sind solche Aktuatoren 10 einer Kippeinheit 8 so ausgebildet, dass sie über mit dem Funktionselement 2 verbundene Richtelemente 13,13', also indirekt, auf einen Schaft 12 des Funktionselements 2 einwirken.

Die Aktuatoren 10 der Kippeinheit 8 sind vorzugsweise in zumindest einer, im wesentlichen horizontal ausgerichteten Ebene 14,14' und im wesentlichen rechtwinklig zueinander auf den Schaft 12 eines Funktionselements 2 einwirkend angeordnet (vgl. Fig. 1, 3A, 4A). Derart angeordnete Aktuatoren 10 definieren ein individuelles, von den Bewegungsachsen der Robotarme 6 völlig unabhängiges Koordinatensystem. Vorzugsweise stehen die Aktuatoren 10 in der selben horizontalen Ebene 14,14' genau rechtwinklig zueinander, so dass ein kartesisches Koordinatensystem definiert wird.

Die Kippeinheit 8 umfasst in ihrer einfachsten Ausführungsform eine gelenklose Halterung (vgl. Fig. 4), in welcher ein Funktionselement 2 fixiert wird. In einer bevorzugten Ausführungsform umfasst die Kippeinheit 8 ein Gelenk 9, welches - vorzugsweise symmetrisch - zwischen den Ebenen 14,14', angeordnet ist (vgl. Fig. 1 und 3).

Die Aktuatoren 10 einer Kippeinheit 8 können auch im wesentlichen vertikal ausgerichtet sein, so dass sie im wesentlichen in Z-Richtung auf die mit einem Funktionselement 2 verbundenen Richtelemente 13,13' einwirken können (vgl. Fig. 2, und 3B). Als im wesentlichen vertikal einwirkend auf die Richtelemente 13",13"' wird auch eine Anordnung der Aktuatoren gemäss Fig. 4B bezeichnet. Somit wird mit "im wesentlichen vertikal" - unabhängig von der aktuellen Orientierung der Aktuatoren 10 - die Einwirkungsrichtung dieser Aktuatoren 10 auf die Oberfläche der Richtelemente 13,13',13",13"' bezeichnet.

Alle Aktuatoren 10 einer Kippeinheit 8 oder ein Teil dieser Aktuatoren 10 können in der umgekehrten Richtung agierend am Funktionselement 2 oder an den Richtelementen 13 fixiert sein und auf entsprechende Gegenflächen an der Kippeinheit 8 wirken (nicht gezeigt).

Die Aktuatoren 10 einer Kippeinheit 8 sind bevorzugt in zwei rechtwinklig zu einander stehenden, im wesentlichen vertikal ausgerichteten Ebenen 15,15' angeordnet (vgl. Fig. 2 und Fig. 5-8). Speziell bevorzugt ist, dass diese Ebenen 15,15' parallel zu der X-Richtung bzw. parallel zu der Y-Richtung eines rechteckigen Arbeitsfeldes 5 angeordnet sind.

Gemäss Figur 1 und 2 umfasst das System 3 bevorzugt ein horizontales Arbeitsfeld 5 mit einer Längenausdehnung (X) und einer sich im wesentlichen rechtwinklig dazu erstreckenden Querausdehnung (Y). Der Robotarm 6 ist speziell bevorzugt auch zum Ausführen von Bewegungen in X- und/oder Y-Richtung ausgebildet. Gemäss einer besonders bevorzugten Ausführungsform der Erfindung sind die Aktuatoren 10 der Kippeinheit 8 parallel zu der X-Richtung bzw. parallel zu der Y-Richtung des Arbeitsfeldes 5 angeordnet, so dass ihr kartesisches Koordinatensystem mit den X- und Y-Achsen des horizontalen Arbeitsfeldes 5 übereinstimmen.

Alle Aktuatoren 10 sind vorzugsweise als Piezoelemente ausgebildet, wobei jeweils zwei Aktuatoren 10 ein einander entgegen wirkendes Funktionspaar bilden (vgl. Fig. 1, 2, 3B und 4B). Alternativ kann vorgesehen sein, dass jeweils ein Aktuator 10 und ein passives Federelement 16 ein solches Funktionspaar bilden (vgl. Fig. 3A und 4A). Es kann aber auch vorgesehen sein, dass die Elastizität eines Funktionselements 2 bzw. dessen Schaftes 12 ausgenutzt wird und den Aktuatoren als entgegen wirkendes Element dient (nicht gezeigt). Im einfachsten Fall wirken somit nur zwei Aktuatoren 10 (z.B. einer in X-Richtung und einer in Y-Richtung) auf ein einseitig eingespanntes Funktionselement 2 ein.

Ein erfindungsgemässes System 3 zum Arbeiten mit Flüssigkeitsproben 4 umfasst ein im wesentlichen horizontales Arbeitsfeld 5 sowie zumindest einen Robotarm 6 mit einer zugeordneten Steuerung. Der Robotarm 6 umfasst zumindest ein im wesentlichen senkrecht zum Arbeitsfeld 5 in einer Z-Richtung ausgerichtetes Funktionselement 2. Dabei ist der Robotarm 6 zum Bewegen des Funktionselements 2 in zumindest einem Teilbereich 7 des Arbeitsfelds 5 und zumindest in der Z-Richtung ausgebildet. Ein solches System ist erfindungsgemäss dadurch gekennzeichnet, dass es zumindest eine der beschriebenen Vorrichtungen 1 sowie eine Steuereinheit 17 zum Ausrichten der funktionellen Enden 22 der Funktionselemente 2 in Bezug auf eine senkrecht zum Arbeitsfeld 5 stehende Z-Achse 11 umfasst.

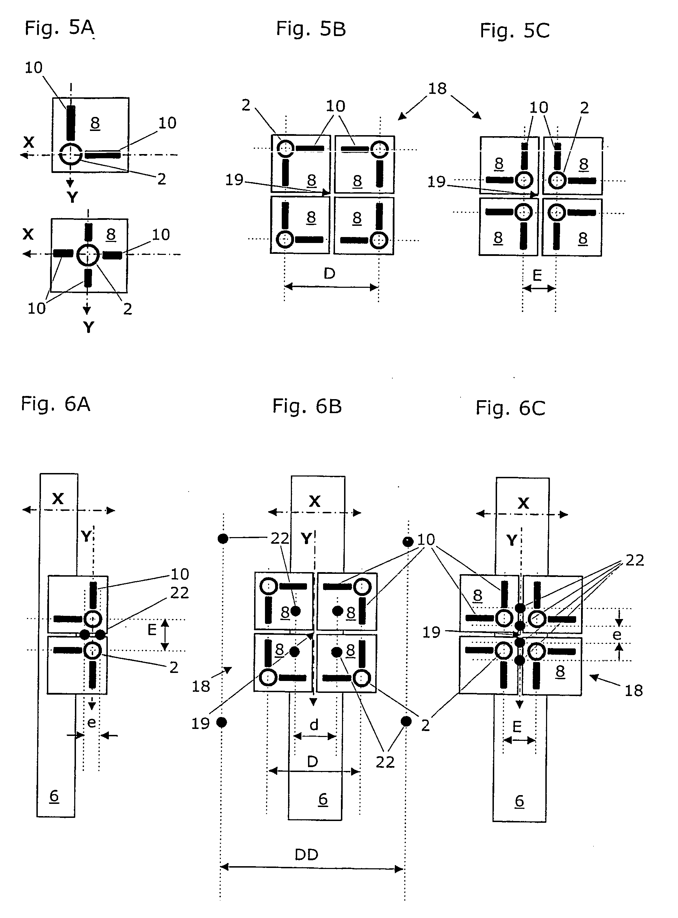

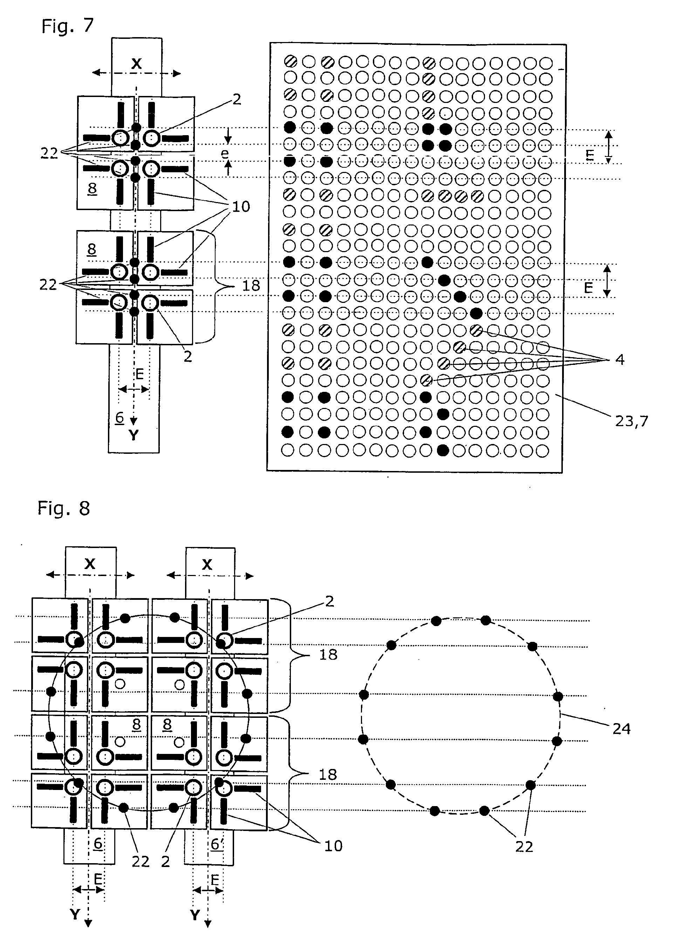

Ein solches System 3 umfasst bevorzugt eine geradzahlige Anzahl von Vorrichtungen 1 bzw. Kippeinheiten 8, die an dem Robotarm 6, vorzugsweise in Vierergruppen, beweglich angeordnet sind (vgl. Fig. 5B, 5C; 6B, 6C; 7 und 8). Jede dieser Vierergruppen von Vorrichtungen 1 bzw. Kippeinheiten 8 ist vorzugsweise als gemeinsam am Robotarm 6 bewegliche Vierereinheit 18 ausgebildet (vgl. Fig. 6B, 6C, 7 und 8). Dabei sind die Funktionselemente 2 jeder Vierereinheit 18 bevorzugt symmetrisch zu deren Zentrum 19 mit grossem (vgl. Fig. 5B und 6B), mittlerem (entsprechend Fig. 5A, unten) oder kleinem Abstand (vgl. Fig. 5C und 6C) angeordnet sind. Eine besonders bevorzugte Ausführungsform eines Systems 3 zum Arbeiten mit Flüssigkeitsproben 4 umfasst zwei Robotarme 6,6' (vgl. Fig. 8) mit je zwei in Vierereinheiten 18 angeordneten Vorrichtungen 1 bzw. Kippeinheiten 8.

Figur 1 zeigt ein 3D-Schema einer in ein Liquid-Handling System eingebauten Vorrichtung 1, gemäss einer ersten Ausführungsform. Das Liquid Handling System 3 umfasst hier ein horizontales, rechteckiges Arbeitsfeld 5 mit einer Längenausdehnung X und einer sich rechtwinklig dazu erstreckenden Querausdehnung Y. Die Bezeichnung dieser Ausdehnungsrichtungen ist willkürlich und entspricht der gängigen Bezeichnung an marktüblichen Arbeitsplattformen. Selbstverständlich könnten die Richtungsbezeichnungen X und Y auch miteinander vertauscht werden. Gezeigt ist eine Kippeinheit 8, welche an einem Robotarm 6 in Y- und - senkrecht zum Arbeitsfeld 5 - in Z-Richtung beweglich angeordnet ist. Die Beweglichkeit der Kippeinheit 8 in Z-Richtung kann (wie dargestellt) durch den Robotarm 6 selbst oder durch die am Robotarm verschiebbare Kippeinheit 8 bewerkstelligt werden. Durch eine Kombination der Y-Bewegung der Kippeinheit 8 und der Beweglichkeit des Robotarms in X-Richtung kann das ganze Arbeitsfeld 5, zumindest aber ein Teilbereich 7 dieses Arbeitsfeldes mit dem Funktionellen Ende 22 eines hier als Pipettenspitze 20 ausgebildeten Funktionselements 2 bearbeitet werden. Gemäss der ersten Ausführungsform der Erfindung wirken die Aktuatoren 10 direkt auf den Schaft 12 des Funktionselements 2. Die beiden horizontalen Ebenen 14,14', in welchen die Aktuatoren 10 angeordnet sind befinden sich in gleichem Abstand zu dem Gelenk 9, welches die Kippbarkeit des Funktionselements 2 verbessert.

Figur 2 zeigt ein 3D-Schema einer in ein Liquid-Handling System eingebauten Vorrichtung, gemäss einer zweiten Ausführungsform, bei welcher die Aktuatoren 10 an einem Richtelement 13 angreifen. Im Gegensatz zu der horizontalen Ausrichtung der Aktuatoren in Fig. 1 sind die Aktuatoren 10 hier vertikal angeordnet und greifen senkrecht an den horizontal herausstehenden Richtelementen 13,13' an.

Figur 3A zeigt einen vertikalen Teilschnitt der in ein Liquid-Handling System 3 eingebauten Vorrichtung 1, gemäss der ersten Ausführungsform in Fig. 1. Der Schaft 12 des Funktionselements 2, welcher als Metallspitze bzw. Hohlnadel einer Pipette ausgebildet sein kann, wird in einem Gelenk 9 kippbar gehalten. Eine solche Hohlnadel sowohl in einem Pipetiergerät als auch in einem Dispenser eingesetzt werden; sie wird deshalb als Pipettenspitze odar als Dispenserspitze bezeichnet. Dieses Gelenk 9 besteht hier aus einer Gelenkkugel und einer Gelenkpfanne. An der Gelenkpfanne ist eine Vorrichtung angeordnet, welche die Aktuatoren 10 trägt (vgl. Fig. 3A), oder welche den Aktuatoren 10 als Gegenfläche dient (nicht gezeigt). In einem Abstand A zum Gelenk 9 sind direkt auf den Schaft 12 des Funktionselements 2 wirkende Piezoelemente 10 angeordnet. Die geschwungenen Pfeile zeigen die Verbindung der Piezoelemente 10 zur Steuereinheit 17 zum Steuern der Piezoaktivität an. In einem Abstand A' zum Gelenk 9 sind passive Federelemente 16 angeordnet, welche ebenfalls direkt auf den Schaft 12 des Funktionselements 2 wirken. Zum Schutz dieses Schafts 12 kann eine Hülse (nicht gezeigt) vorgesehen werden, welche zwischen den Federelementen 16 und dem Schaft 12 liegt. Eine solche Hülse kann auch zur Verbreiterung bzw. Einebnung der Angriffsfläche der Federelemente 16, aber auch der Aktuatoren 10 am Schaft 12 verwendet werden. Hier liegt das Gelenk 9 nicht symmetrisch zu den Ebenen, in welchen die Aktuatoren 10 bzw. Federelemente 16 angeordnet sind: Die Distanz A ist offensichtlich grösser als die Distranz A'.

Figur 3B zeigt vertikale Teilschnitte der in ein Liquid-Handling System 3 eingebauten Vorrichtung, gemäss der zweiten Ausführungsform in Fig. 2. Der Schaft 12 des Funktionselements 2 wird auch hier in einem Gelenk 9 kippbar gehalten. Dieses Gelenk 9 besteht ebenfalls aus einer Gelenkkugel und einer Gelenkpfanne. Die Gelenkpfanne ist zumindest an jenen Stellen durchbrochen, an welchen Richtelemente 13,13' von der Gelenkkugel auskragen. An der Gelenkpfanne ist eine Vorrichtung angeordnet, welche die Aktuatoren 10 trägt. In einem Abstand B zum Gelenk 9 und zur vertikalen Z-Achse 11 sind auf die Richtelemente 13,13' wirkende Piezoelemente 10 vertikal angeordnet. Die geschwungenen Pfeile zeigen die Verbindung der Piezoelemente 10 zur Steuereinheit 17 zum Steuern der Piezoaktivität an.

In der linken Darstellung ist das Funktionselement 2, bzw. dessen Mantel 12 exakt vertikal ausgerichtet, die Aktuatoren 10 befinden sich in einer Ruhestellung. Wichtig ist, dass die Reibung des Kugelgelenkes so gross ist, dass sich die Lage des Funktionselements 2 nicht spontan verstellen kann. Es kann auch vorgesehen seine, dass die Aktuatoren 10 permanent zur Stabilisierung dieser Lage beitragen bzw. diese bestimmen.

In der rechten Darstellung ist das Funktionselement 2, bzw. dessen Mantel 12 gegenüber der Z-Achse 11 verkippt, so dass die Achse 11' des Funktionselements 2 und die Z-Achse 11 einen Zwischenraum (a) definieren, der umso grösser ist, je weiter das funktionelle Ende 22 des Funktionselements 2 vom Gelenk 9 entfernt ist. Die Auslenkung wird - bei gleicher Aktivierung der Piezoelemente 10 - umso grösser, je kleiner deren Abstand B von der Z-Achse ist.

Figur 4A zeigt einen vertikalen Teilschnitt einer in ein Liquid-Handling System eingebauten Vorrichtung, gemäss einer dritten Ausführungsform. Diese dritte Ausführungsform ist dadurch kennzeichnet, dass jedes Funktionselement 2 in einer Halterung fixiert ist. Diese Halterung ist ein Bestandteil der Kippeinheit 8. An der Halterung ist eine Vorrichtung angeordnet, welche Aktuatoren 10 trägt. In einem Abstand C zu der Halterung sind direkt auf den Schaft 12 des Funktionselements 2 wirkende Piezoelemente 10 angeordnet. Die geschwungenen Pfeile zeigen die Verbindung der Piezoelemente 10 zur Steuereinheit 17 zum Steuern der Piezoaktivität an. Hier ist ein Funktionspaar gezeigt, welches aus einem Piezoelement 10 und einem passiven Federelement 16 besteht. Der Vorteil solcher Federelemente 16 besteht unter anderem darin, dass das Funktionselement 2 spielfrei gehalten ist. In einer alternativen Ausführungsform kann auf die Federelemente 16 verzichtet werden, wenn die Elastizität des Funktionselements 2 bzw. dessen Schaftes 12 selbst passiv dem Anpressdruck der Piezoelemente entgegen wirkt. Im einfachsten Fall genügen somit ein elastisches, in einer Halterung fixiertes Funktionselement 2, auf welches zwei in einer Ebene 14 liegende (vgl. Fig. 1), rechtwinklig zueinander angeordnete Aktivatoren 10 einwirken. Je kürzer die Distanz C ist, desto grösser ist die mögliche Auslenkung des funktionellen Endes 22 eines Funktionselements 2 von der Z-Achse 11. Allerdings wächst mit dem Reduzieren des Abstandes C auch die Kraft, welche die Aktuatoren 10 zum Bewegen des Funktionselements 2 aufwenden müssen. Der Schaft 12 des Funktionselements 2 kann hier als Temperaturfühler oder als Hohlkapillare einer Metallpipettenspitze interpretiert werden. Die Öffnung dieser Pipettenspitze (oder Dispenserspitze) bzw. das Ende des Temperaturfühlers ist hier das funktionelle Ende 22 des Funktionselements 2.

Figur 4B zeigt einen vertikalen Teilschnitt einer in ein Liquid-Handling System eingebauten Vorrichtung, gemäss einer vierten Ausführungsform. Diese vierte Ausführungsform ist dadurch gekennzeichnet, dass die Aktuatoren 10 bzw. deren ebenfalls als Aktuatoren 10 oder Federelemente 16 ausgebildeten Funktionspartner weder in der Horizontalen noch in der Vertikalen angeordnet sind; sie stehen also in einem Winkel β zur Z-Achse 11. Diese Anordnung ermöglicht eine schlankere Bauweise der Kippeinheiten 8. Ebenfalls zu der schlankeren Bauweise trägt der Umstand bei, dass das Funktionselement 2 ohne Gelenk in einer Halterung der Kippeinheit gehalten ist. Wenn ein elastisches Funktionselement 2 und total nur zwei Aktuatoren 10 zur Verkippung in Y- oder Z- Richtung verwendet werden, so kann die Baugruppe für eine Kippeinrichtung 8 zusätzlich verkleinert werden. Vorzugsweise trägt der Schaft 12 des Funktionselements 2 Richtelemente 13",13"', deren eine Fläche durch die Aktuatoren 10 jeweils im wesentlichen senkrecht beaufschlagt wird. Die zu Fig. 4A gemachten Bemerkungen bezüglich des Abstandes C gelten sinngemäss auch hier. Das Funktionselement 2 in Fig. 4B ist hier als Adapter für Wegwerfpipettenspitzen 20 gezeichnet. Die Öffnung dieser Wegwerfpipetten ist hier das funktionelle Ende 22 des Funktionselements 2.

Figur 5A zeigt zwei Grundrissschemen von erfindungsgemässen Kippeinheiten. Das obere Schema zeigt eine exzentrische Anordnung des Funktionselements 2 in Bezug auf die Kippeinheit 8. Diese Anordnung eignet sich besonders für den Einsatz von total nur zwei Aktuatoren 10 zum Verkippen des elastischen Funktionselements 2 in X- und in Y-Richtung. Das untere Schema zeigt eine konzentrische Anordnung des Funktionselements 2 in Bezug auf die Kippeinheit 8. Diese Anordnung eignet sich besonders für den Einsatz von total zwei oder vier Funktionspaaren von Aktuatoren 10, die auf einer Ebene 14 oder 14' (vgl. Fig. 1) angeordnet sind. Bei fixierten, elastischen Funktionselementen 2 würde diese Ebene 14' selbstverständlich unterhalb der Halteeinrichtung der Kippeinheit liegen (vgl. Fig. 4A). Dabei könnte jeweils ein Partner der Funktionspaare als Federelement 16 ausgebildet sein.

Figur 5B zeigt eine erste Variante eines Grundrissschemas einer Vierereinheit 18 von erfindungsgemässen Kippeinheiten 8. Die in den Kippeinheiten 8 exzentrisch angeordneten Funktionselemente 2 sind so verteilt, dass sie in einem grösstmöglichen Abstand zum Zentrum 19 dieser Vierereinheit 18 stehen. Dadurch ergibt sich ein Abstand D zwischen den Achsen der unverkippten Funktionselemente 2. Dieser Abstand D kann nun so gewählt werden, dass er gerade dem Gitterabstand der Wells einer Mikroplatte entspricht. D beträgt bei einer 96-er Mikroplatte 9 mm, bei einer 24-er Mikroplatte das Doppelte und bei einer 384-er Mikroplatte die Hälfte dieses Masses. Ohne die Kippeinheiten 8 gegeneinander zu verschieben, d.h. bei gleichbleibender Anordnung der Kippeinheiten 8 als Vierereinheit 18, kann somit mittels Verkippung der als Pipettenspitzen ausgebildeten Funktionselemente 2 eine benachbarte, in einem Quadrat angeordnete Vierergruppe von Wells in einer 96-er Mikroplatte und in einer 24-er Mikroplatte erreicht werden.

Figur 5C zeigt eine zweite Variante eines Grundrissschemas einer Vierereinheit 18 von erfindungsgemässen Kippeinheiten 8. Die in den Kippeinheiten 8 exzentrisch angeordneten Funktionselemente 2 sind so verteilt, dass sie in einem kleinstmöglichen Abstand zum Zentrum 19 dieser Vierereinheit 18 stehen. Dadurch ergibt sich ein Abstand E zwischen den Achsen der unverkippten Funktionselemente 2. Dieser Abstand E kann nun so gewählt werden, dass er gerade dem Gitterabstand der Wells einer Mikroplatte entspricht. E beträgt bei einer 96-er Mikroplatte 9 mm, bei einer 24-er Mikroplatte das Doppelte und bei einer 384-er Mikroplatte die Hälfte dieses Masses. Ohne die Kippeinheiten 8 gegeneinander zu verschieben, d.h. bei gleichbleibender Anordnung der Kippeinheiten 8 als Vierereinheit 18, kann somit mittels Verkippung der als Pipettenspitzen ausgebildeten Funktionselemente 2 eine benachbarte, in einem Quadrat angeordnete Vierergruppe von Wells in einer 384-er Mikroplatte und in einer 96-er Mikroplatte erreicht werden.

Figur 6A zeigt eine schematische Draufsicht auf einen in X-Richtung beweglichen Robotarm 6 mit einer in Y-Richtung beweglichen Zweiereinheit von erfindungsgemässen Kippeinheiten 8 mit einem Abstand E der unverkippten Funktionselemente 2. Ebenfalls dargestellt ist (dunkle Punkte) die Lage der funktionellen Enden 22 der Funktionselemente 2 in einer möglichen Verkippungsstellung. Der Achsabstand dieser funktionellen Elemente 22 wird hier als (e) bezeichnet und beträgt 4.5 mm für das Bearbeiten von 384-er Mikroplatten bzw. 2.25 mm für das Bearbeiten von 1536-er Mikroplatten. Vorzugsweise beträgt das Mass E, der Achsabstand der unverkippten Funktionselemente 2, das Doppelte des Masses (e).

Figur 6B zeigt eine schematische Draufsicht auf einen Robotarm 6 mit einer Vierereinheit 18 von erfindungsgemässen Kippeinheiten 8, gemäss Fig. 5B. Ebenfalls dargestellt ist (dunkle Punkte) die Lage der funktionellen Enden 22 der Funktionselemente 2 in zwei möglichen Verkippungsstellungen. Der kleinste Achsabstand dieser funktionellen Elemente 22 wird hier als (d) bezeichnet und beträgt 4.5 mm für das Bearbeiten von 384-er Mikroplatten. Der grösste Achsabstand dieser funktionellen Elemente 22 wird hier als (DD) bezeichnet und beträgt 18 mm für das Bearbeiten von 24-er Mikroplatten. Vorzugsweise entspricht in diesem Fall der Achsabstand der unverkippten Funktionselemente 2 dem Mass D = 9 mm.

Figur 6C zeigt eine schematische Draufsicht auf einen Robotarm 6 mit einer Vierereinheit 18 von erfindungsgemässen Kippeinheiten, gemäss Fig. 5C. Ebenfalls dargestellt ist (dunkle Punkte) die Lage der funktionellen Enden 22 der Funktionselemente 2 in einer möglichen Verkippungsstellung. Der kleinste Achsabstand dieser funktionellen Elemente 22 wird hier als (e) bezeichnet und beträgt 4.5 mm für das Bearbeiten von 384-er Mikroplatten bzw. 2.25 mm für das Bearbeiten von 1536-er Mikroplatten. Vorzugsweise entspricht in diesem Fall der Achsabstand der unverkippten Funktionselemente 2 dem Mass E = 9 mm bzw. 4.5 mm.

Figur 7 zeigt eine schematische Draufsicht auf einen Robotarm 6 mit zwei Vierereinheiten 18 von erfindungsgemässen Kippeinheiten 8 gemäss Fig. 5C sowie eine Draufsicht auf eine Mikroplatte mit 384 Wells. Die Bewegungsmöglichkeiten des Roboterarms 6 bzw. der Vierereinheiten 18 sind mit den Pfeilen X und Y angedeutet. Diese Mikroplatte stellt einerseits ein Array 23 von Probenbehältern bzw. Wells dar; andererseits kann - falls nur mit einer Mikroplatte gearbeitet werden soll - diese Mikroplatte auch als Teilbereich 7 des Arbeitsfeldes 3 bezeichnet werden. Entsprechend der bereits in Fig. 6C besprochenen Verkippung der Funktionselemente 2 sind die funktionellen Enden 22 dieser Funktionselemente 2 entlang der Y-Achse des Robotarms 6 angeordnet.

Im Array 23 der Mikroplatte sind beispielhafte Muster von bearbeiteten Wells eingetragen. Dabei wird mit der gleichen Farbgebung von Vierergruppen ein mögliches Umpipettieren der Flüssigkeitsproben 4 von einer ersten quadratischen Anordnung (links, dem Achsabstand E einer 96-er Mikroplatte entsprechend) in eine praktisch beliebige zweite Anordnung (rechts) in der 384-er Mikroplatte mit dem Achsabstand (e) angedeutet. Für dieses Umpipettieren müssen der Robotarm 6 und/oder die Mikroplatte gegeneinander in X- und Z-Richtung bewegt werden; dabei verändern die Vierereinheiten 18 ihre Position in Y-Richtung gegenüber dem Robotarm 6 und auch gegenüber der Mikroplatte nicht. Vorzugsweise können die beiden Vierereinheiten 18 unabhängig voneinander in Y-Richtung am Robotarm 6 bewegt werden. Die notwendigen Antriebe für das Bewegen des Robotarms 6 und Vierereinheiten sind hier, wie auch die dafür zu verwendende Steuerung oder Steuereinheit 17, nicht gezeigt.

Figur 8 zeigt eine schematische Draufsicht auf zwei Robotarme 6,6' mit je zwei Vierereinheiten 18 von erfindungsgemässen Kippeinheiten 8 gemäss Fig. 5C. Zudem ist eine Draufsicht auf eine Arbeitsfläche mit einer geometrischen Anordnung der Proben gezeigt. Diese Arbeitsfläche kann beispielsweise durch eine Anordnung von Probenröhrchen für die Zentrifugation oder durch eine sogenannte LAB CD^{®} (eingetragenes Warenzeichen der Anmelderin), also einer runden Scheibe mit Mikrokanälen für die Bearbeitung von Flüssigkeitsproben, definiert sein. Entsprechend der Anordnung der Zentrifugenröhrchen bzw. der Einfüllöffnungen der LAB CD^{®} kann die Anordnung der funktionellen Enden 22 dieser Funktionselemente 2 die geometrische Figur eines Kreises oder irgend eine andere geometrische Verteilung annehmen.

Derart von den Bewegungsachsen der Robotarme 6,6' unabhängige Verteilungen der funktionellen Enden 22 dieser Funktionselemente 2, wie sie in den Figuren 6 bis 8 lediglich beispielhaft und keinesfalls abschliessend dargestellt sind, können nur mit der Verwendung der erfindungsgemässen Vorrichtung 1 bzw. mit den erfindungsgemässen Kippeinheiten 8 realisiert werden.

Vorzugsweise wird die Verkippung aller von einem oder von zwei Robotarmen 6 getragenen Funktionselemente 2 koordiniert. Vorzugsweise wird dazu eine Steuereinheit 17 verwendet, die zur Koordinierung der Bewegungssteuerung der Robotarme 6,6' und der Positionsänderung der funktionellen Enden 22 dieser Funktionselemente 2 in Bezug auf eine senkrecht zum Arbeitsfeld 5 stehende Z-Achse 11 ausgebildet ist.

Abweichend von den bisherigen Darstellungen der Erfindung sieht eine speziell bevorzugte Ausführungsform vor, dass die Vorrichtung 1 zum Transportieren oder Untersuchen von Flüssigkeiten in einem System 3 zum Arbeiten mit Flüssigkeitsproben 4 ausgebildet ist. Ein solches System umfasst ein im wesentlichen horizontales, sich in einer X-Richtung und in einer dazu rechtwinkligen Y-Richtung ausdehnendes Arbeitsfeld 5. Die speziell bevorzugte, erfindungsgemässe Vorrichtung 1 umfasst zumindest ein Funktionselement 2 mit wenigstens einem funktionellen Ende 22. Die Funktionselemente 2 sind im wesentlichen senkrecht zum Arbeitsfeld 5 in einer Z-Richtung ausgerichtet und die Vorrichtung 1 umfasst zumindest eine Kippeinheit 8 zum kippbaren Halten des zumindest einen Funktionselements 2. Diese speziell bevorzugte Ausführungsform ist dadurch gekennzeichnet, dass die Vorrichtung 1 Aktuatoren 10 zum individuellen Ausrichten der funktionellen Enden 22 dieser Funktionselemente 2 in Bezug auf eine senkrecht zum Arbeitsfeld 5 stehende Z-Achse 11 und eine Steuereinheit 17 zum elektrischen Ansteuern dieser Aktuatoren 10 umfasst, wodurch jedes der Funktionselemente 2 individuell und von den X- und Y-Ausrichtungen des Arbeitsfeldes unabhängig kippbar ausgebildet ist. Optional können einzelne oder mehrere dieser Vorrichtungen auch an einem oder mehreren Robotarmen 6,6' befestigt sein.

In einem solchen System, welches mit einer oder mehreren Vorrichtungen 1 zum Transportieren oder Untersuchen von Flüssigkeiten ausgerüstet ist, welches aber keinen Robotarm 6 zum Bewegen dieser Vorrichtungen umfasst, werden vorzugsweise zuerst die Flüssigkeitsbehälter in X- und/oder Y-Richtung die unmittelbare Nähe der Vorrichtungen 1 bewegt. Dies kann manuell oder automatisiert erfolgen. Dann werden die funktionellen Enden 22 der Funktionselemente 2 durch individuelles Verkippen auf die Position der Flüssigkeitsbehälter (beispielsweise bestimmter Wells einer Mikroplatte) ausgerichtet. Zum Abpippetieren von Flüssigkeiten werden die Flüssigkeitsbehälter angehoben, bis die funktionellen Enden 22 der Funktionselemente 2 in die Flüssigkeitsbehälter eintauchen. Zum Dispensieren von Flüssigkeiten in die Flüssigkeitsbehälter werden die Flüssigkeitsbehälter nur soweit angehoben, dass die funktionellen Enden 22 der Funktionselemente 2 noch nicht in die Flüssigkeitsbehälter eintauchen.

Die Bezugszeichen weisen jeweils auf entsprechende Merkmale hin, auch wenn nicht in jedem Fall ausdrücklich darauf Bezug genommen wird. Eine beliebige Kombination der Elemente der verschiedenen Ausführungsformen gehört zum Umfang der vorliegenden Erfindung.

## Patentansprüche

1. Vorrichtung (1) für das Transportieren oder Untersuchen von Flüssigkeiten in einem System (3) zum Arbeiten mit Flüssigkeitsproben (4), das ein im wesentlichen horizontales, sich in einer X-Richtung und in einer dazu rechtwinkligen Y-Richtung ausdehnendes Arbeitsfeld (5) umfasst, welche Vorrichtung (1) zumindest ein Funktionselement (2) mit wenigstens einem funktionellen Ende (22) umfasst, wobei die Funktionselemente (2) im wesentlichen senkrecht zum Arbeitsfeld (5) in einer Z-Richtung ausgerichtet sind und die Vorrichtung (1) zumindest eine Kippeinheit (8) zum kippbaren Halten des zumindest einen Funktionselements (2) umfasst, **dadurch gekennzeichnet, dass** die Kippeinheit (8) Aktuatoren (10) zum individuellen Ausrichten der funktionellen Enden (22) dieser Funktionselemente (2) in Bezug auf eine senkrecht zum Arbeitsfeld (5) stehende Z-Achse (11) und eine Steuereinheit (17) zum elektrischen Ansteuern dieser Aktuatoren (10) umfasst, wodurch jedes der Funktionselemente (2) individuell und von den X- und Y-Ausrichtungen des Arbeitsfeldes unabhängig kippbar ausgebildet ist.

2. Vorrichtung (1) nach Anspruch 1, **dadurch gekennzeichnet, dass** sie an einem Robotarm (6) befestigt ist, welcher zum Bewegen des Funktionselements (2) in zumindest einem Teilbereich (7) des Arbeitsfelds (5) und zumindest in der Z-Richtung ausgebildet ist, wobei die Steuereinheit (17) zur Koordinierung der Bewegungssteuerung des Robotarms (6) und der Positionsänderung der funktionellen Enden (22) dieser Funktionselemente (2) in Bezug auf eine senkrecht zum Arbeitsfeld (5) stehende Z-Achse (11) ausgebildet ist.

3. Vorrichtung (1) nach Anspruch 1 oder 2, **dadurch gekennzeichnet, dass** die Aktuatoren (10) der Kippeinheit (8) auf einen Schaft (12) des Funktionselements (2) und/oder auf mit dem Funktionselement (2) verbundene Richtelemente (13,13') einwirkend ausgebildet sind.

4. Vorrichtung (1) nach Anspruch 3, **dadurch gekennzeichnet, dass** die Aktuatoren (10) der Kippeinheit (8) in zumindest einer, im wesentlichen horizontal ausgerichteten Ebene (14,14) und im wesentlichen rechtwinklig zueinander auf den Schaft (12) eines Funktionselements (2) einwirkend angeordnet sind.

5. Vorrichtung (1) nach Anspruch 4, **dadurch gekennzeichnet, dass** die Kippeinheit (8) ein Gelenk (9) umfasst, welches - vorzugsweise symmetrisch - zwischen den Ebenen (14,14'), angeordnet ist.

6. Vorrichtung (1) nach Anspruch 3, **dadurch gekennzeichnet, dass** die Aktuatoren (10) der Kippeinheit (8) im wesentlichen vertikal ausgerichtet und im wesentlichen in Z-Richtung auf die mit einem Funktionselement (2) verbundenen Richtelemente (13,13') einwirkend angeordnet sind.

7. Vorrichtung (1) nach Anspruch 6, **dadurch gekennzeichnet, dass** die Aktuatoren (10) der Kippeinheit (8) in zwei rechtwinklig zu einander stehenden, im wesentlichen vertikal ausgerichteten Ebenen (15,15') angeordnet sind.

8. Vorrichtung (1) nach Anspruch 7, **dadurch gekennzeichnet, dass** die Ebenen (15,15') parallel zu der X-Richtung bzw. parallel zu der Y-Richtung des Arbeitsfeldes (5) angeordnet sind.

9. Vorrichtung (1) nach einem der Ansprüche 6 bis 8, **dadurch gekennzeichnet, dass** die Kippeinheit (8) ein Gelenk (9) umfasst, welches - vorzugsweise symmetrisch - auf der Höhe der Richtelemente (13,13') angeordnet ist.

10. Vorrichtung (1) nach einem der vorhergehenden Ansprüche, **dadurch gekennzeichnet, dass** alle Aktuatoren (10) als Piezoelemente ausgebildet sind, wobei jeweils zwei Aktuatoren (10) ein einander entgegen wirkendes Funktionspaar bilden.

11. Vorrichtung (1) nach einem der Ansprüche 1 bis 9, **dadurch gekennzeichnet, dass** immer ein als Piezoelement ausgebildeter Aktuator (10) und ein passives Federelement (16) ein einander entgegen wirkendes Funktionspaar bilden.

12. Vorrichtung (1) nach einem der vorhergehenden Ansprüche, **dadurch gekennzeichnet, dass** diese Funktionselemente (2) als Pipetten-Spitzen, als Dispenser-Spitzen (20) oder als Fühler (21) ausgebildet sind.

13. System (3) zum Arbeiten mit Flüssigkeitsproben (4), wobei das System (3) ein im wesentlichen horizontales, sich in einer X-Richtung und in einer dazu rechtwinkligen Y-Richtung ausdehnendes Arbeitsfeld (5) umfasst **dadurch gekennzeichnet, dass** das System (3) zumindest eine Vorrichtung (1) gemäss einem der Ansprüche 1 bis 12 umfasst.

14. System (3) nach Anspruch 13, welches ein horizontales Arbeitsfeld (5) mit einer Längenausdehnung (X) und einer sich im wesentlichen rechtwinklig dazu erstreckenden Querausdehnung (Y) sowie zumindest einen Robotarm (6) umfasst, der auch zum Ausführen von Bewegungen in X- und/oder Y-Richtung ausgebildet ist, **dadurch gekennzeichnet, dass** die Aktuatoren (10) der Kippeinheit (8) parallel zu der X-Richtung bzw. parallel zu der Y-Richtung des Arbeitsfeldes (5) angeordnet sind.

15. System (3) nach Anspruch 14, **dadurch gekennzeichnet, dass** an dem Robotarm (6) eine geradzahlige Anzahl von Vorrichtungen (1), vorzugsweise in Vierergruppen, beweglich angeordnet sind.

16. System (3) nach Anspruch 14, **dadurch gekennzeichnet, dass** jede Vierergruppe von Vorrichtungen (1) als gemeinsam am Robotarm (6) bewegliche Vierereinheit (18) ausgebildet ist.

17. System (3) nach Anspruch 14, **dadurch gekennzeichnet, dass** die Funktionselemente (2) jeder Vierereinheit (18) symmetrisch zu deren Zentrum (19) mit grossem, mittlerem oder kleinem Abstand angeordnet sind.

18. Verwendung einer Vorrichtung (1) gemäss einem der Ansprüche 1 bis 12 in einem System (3) zum Arbeiten mit Flüssigkeitsproben (4), das ein im wesentlichen horizontales, sich in einer X-Richtung und in einer dazu rechtwinkligen Y-Richtung ausdehnendes Arbeitsfeld (5) umfasst, welche Vorrichtung (1) zumindest ein Funktionselement (2) mit wenigstens einem funktionellen Ende (22) umfasst, wobei die Funktionselemente (2) im wesentlichen senkrecht zum Arbeitsfeld (5) in einer Z-Richtung ausgerichtet sind und die Vorrichtung (1) zumindest eine Kippeinheit (8) zum kippbaren Halten des zumindest einen Funktionselements (2) umfasst, **dadurch gekennzeichnet, dass** zumindest ein Aktuator (10) einer Kippeinheit (8) dieser Vorrichtung (1) über eine Steuereinheit (17) elektrisch angesteuert wird, worauf die aktivierten Aktuatoren (10) auf dieses Funktionselement (2) einwirken, so dass sich die Position des funktionellen Endes (22) dieses Funktionselements (2) in Bezug auf eine senkrecht zum Arbeitsfeld (5) stehende Z-Achse (11) individuell und von den X- und Y-Ausrichtungen des Arbeitsfeldes unabhängig ändert.

19. Verwendung eines Systems (3) gemäss einem oder mehreren der Ansprüche 13 bis 17 zum Arbeiten mit Flüssigkeitsproben (4), wobei das System (3) ein im wesentlichen horizontales Arbeitsfeld (5), zumindest einen Robotarm (6) mit einer zugeordneten Steuerung und zumindest eine Vorrichtung (1) nach einem der Ansprüche 1 bis 12 mit einem im wesentlichen senkrecht zum Arbeitsfeld (5) in einer Z-Richtung ausgerichteten Funktionselement (2) umfasst, wobei der Robotarm (6) zum Bewegen des Funktionselements (2) in zumindest einem Teilbereich (7) des Arbeitsfelds (5) und zumindest in der Z-Richtung ausgebildet ist, **dadurch gekennzeichnet, dass** zumindest ein Aktuator (10) einer Kippeinheit (8) dieser Vorrichtung (1) über eine Steuereinheit (17) elektrisch angesteuert wird, worauf die aktivierten Aktuatoren (10) auf dieses Funktionselement (2) einwirken, so dass sich die Position des funktionellen Endes (22) dieses Funktionselements (2) in Bezug auf eine senkrecht zum Arbeitsfeld (5) stehende Z-Achse (11) individuell und von den Bewegungsachsen des Robotarms (6) unabhängig ändert.

20. Verwendung nach einem der Ansprüche 18 oder 19, **dadurch gekennzeichnet, dass** die Verkippung aller von einem oder von zwei Robotarmen (6) getragenen Funktionselemente (2) koordiniert wird, wobei die Steuereinheit (17) zur Koordinierung der Bewegungssteuerung der Robotarme (6) und der Positionsänderung der funktionellen Enden (22) dieser Funktionselemente (2) in Bezug auf eine senkrecht zum Arbeitsfeld (5) stehende Z-Achse (11) ausgebildet ist.

21. Verwendung nach einem der Ansprüche 18 bis 20, wobei diese Funktionselemente (2) als Pipetten- bzw. Dispenser-Spitzen (20) oder als Fühler (21) ausgebildet sind, **dadurch gekennzeichnet, dass** die funktionellen Enden (22) dieser Funktionselemente (2) in einem Array (23) oder einer beliebigen geometrischen Figur (24) angeordnet werden.

22. Verwendung nach einem der Ansprüche 18 bis 20, wobei diese Funktionselemente (2) als Pipetten- bzw. Dispenser-Spitzen (20) oder als Fühler (21) ausgebildet sind, **dadurch gekennzeichnet, dass** die funktionellen Enden (22) dieser Funktionselemente (2) eine geometrische Verteilung annehmen, welche der Anordnung von bestimmten Flüssigkeitsbehältern oder Einfüllöffnungen entspricht.

## Claims

1. A device (1) for transporting or assaying liquids in a system (3) for working with liquid samples (4), which comprises an essentially horizontal working field (5), extending in an X direction and a Y direction perpendicular thereto, this device (1) comprising at least one functional element (2) having at least one functional end (22), the functional elements (2) being oriented essentially perpendicularly to the working field (5) in a Z direction and the device (1) comprising at least one tilting unit (8) for tiltable retention of the at least one functional element (2), **characterized in that** the tilting unit (8) comprises actuators (10) for individual orientation of the functional ends (22) of these functional elements (2) in relation to a Z axis (11), which is perpendicular to the working field (5), and a control unit (17) for electrically activating these actuators (10), by which each of the functional elements (2) is implemented as tiltable individually and independently of the X and Y orientations of the working field.

2. The device (1) according to Claim 1, **characterized in that** it is fastened to a robot arm (6), which is implemented to move the functional element (2) in at least a partial area (7) of the working field (5) and at least in the Z direction, the control unit (17) being implemented to coordinate the movement control of the robot arm (6) and the position change of the functional ends (22) of these functional elements (2) in relation to a Z axis (11), which is perpendicular to the working field (5).

3. The device (1) according to Claim 1 or 2, **characterized in that** the actuators (10) of the tilting unit (8) are implemented to act on a shaft (12) of the functional element (2) and/or on orientation elements (13, 13') connected to the functional element (2).

4. The device (1) according to Claim 3, **characterized in that** the actuators (10) of the tilting unit (8) are situated to act in at least one, essentially horizontally oriented plane (14, 14') and essentially perpendicularly to one another on the shaft (12) of a functional element (2).

5. The device (1) according to Claim 4, **characterized in that** the tilting unit (8) comprises a joint (9) which is situated - preferably symmetrically - between the planes (14, 14').

6. The device (1) according to Claim 3, **characterized in that** the actuators (10) of the tilting unit (8) are oriented essentially vertically and are situated to act essentially in the Z direction on the orientation elements (13, 13') connected to a functional element (2).

7. The device (1) according to Claim 6, **characterized in that** the actuators (10) of the tilting unit (8) are situated in two essentially vertically oriented planes (15, 15'), which are essentially perpendicular to one another.

8. The device (1) according to Claim 7, **characterized in that** the planes (15, 15') are situated parallel to the X direction and/or parallel to the Y direction of the working field (5).

9. The device (1) according to one of Claims 6 through 8, **characterized in that** the tilting unit (8) comprises a joint (9) which is situated - preferably symmetrically - at the height of the orientation elements (13, 13').

10. The device (1) according to one of the preceding claims, **characterized in that** all actuators (10) are implemented as piezoelements, each two actuators (10) forming a functional pair acting in opposition to one another.

11. The device (1) according to one of Claims 1 through 9, **characterized in that** one actuator (10) implemented as a piezoelement and one passive spring element (16) always form a functional pair acting in opposition to one another.

12. The device (1) according to one of the preceding claims, **characterized in that** these functional elements (2) are implemented as pipette tips, as dispenser tips (20), or as detectors (21).

13. A system (3) for working with liquid samples (4), the system (3) comprising an essentially horizontal working field (5) extending in an X direction and a Y direction perpendicular thereto, **characterized in that** the system (3) comprises at least one device (1) according to one of Claims 1 through 12.

14. The system (3) according to Claim 13, which comprises a horizontal working field (5) having a longitudinal extension (X) and a transverse extension (Y) extending essentially perpendicularly thereto, as well as at least one robot arm (6), which is also implemented to execute movements in the X and/or Y direction, **characterized in that** the actuators (10) of the tilting unit (8) are situated parallel to the X direction and/or parallel to the Y direction of the working field (5).

15. The system (3) according to Claim 14, **characterized in that** an even number of devices (1) are situated on the robot arm (6) so they are movable, preferably in quartet groups.

16. The system (3) according to Claim 14, **characterized in that** each quartet group of the devices (1) is implemented as a quartet unit (18) movable jointly on the robot arm (6).

17. The system (3) according to Claim 14, **characterized in that** the functional elements (2) of each quartet unit (18) are situated symmetrically to their center (19) at a large, moderate, or small distance.

18. A use of the device (1) according to one of Claims 1 through 12 in a system (3) for working with liquid samples (4), which comprises an essentially horizontal working field (5) extending in an X direction and a Y direction perpendicular thereto, this device (1) comprising at least one functional element (2) having at least one functional end (22), the functional elements (2) being oriented essentially perpendicularly to the working field (5) in the Z direction and the device (1) comprising at least one tilting unit (8) for tiltable retention of the at least one functional element (2), **characterized in that** at least one actuator (10) of a tilting unit (8) of this device (1) is electrically activated via a control unit (17), upon which the activated actuators (10) act on this functional element (2), so that the position of the functional end (22) of this functional element (2) changes in relation to a Z axis (11), which is perpendicular to the working field (5), individually and independently of the X and Y orientations of the working field.

19. A use of a system (3) according to one more of Claims 13 through 17 for working with liquid samples (4), the system (3) comprising an essentially horizontal working field (5), at least one robot arm (6) having an assigned controller, and at least one device (1) according to one of Claims 1 through 12, having a functional element (2) oriented essentially perpendicularly to the working field (5) in a Z direction, the robot arm (6) being implemented to move the functional element (2) in at least a partial area (7) of the working field (5) and at least in the Z direction, **characterized in that** at least one actuator (10) of the tilting unit (8) of this device (1) is electrically activated via a control unit (17), upon which the activated actuators (10) act on this functional element (2), so that the position of the functional end (22) of this functional element (2) changes in relation to a Z axis (11), which is perpendicular to the working field (5), individually and independently of the movement axes of the robot arm (6).

20. The use according to one of Claims 18 or 19, **characterized in that** the tilting of all functional elements (2) carried by one or two robot arms (6) is coordinated, the control unit (17) being implemented to coordinate the movement control of the robot arms (6) and the position change of the functional ends (22) of these functional elements (2) in relation to a Z axis (11) perpendicular to the working field (5).

21. The use according to one of Claims 18 through 20, these functional elements (2) being implemented as pipette or dispenser tips (20) or as detectors (21), **characterized in that** the functional ends (22) of these functional elements (2) are situated in an array (23) or an arbitrary geometric figure (24).

22. The use according to one of Claims 18 through 20, these functional elements (2) being implemented as pipette or dispenser tips (20) or as detectors (21), **characterized in that** the functional ends (22) of these functional elements (2) assume a geometric distribution which corresponds to the configuration of specific liquid containers or filling openings.

## Revendications

1. Dispositif (1) destiné au transport ou à l'analyse de fluides dans un système (3) destiné à travailler avec des échantillons de fluide (4), qui comporte un champ d'action (5) essentiellement horizontal, qui s'étend dans une direction X et dans une direction Y qui lui est perpendiculaire, lequel dispositif (1) comprend au moins un élément fonctionnel (2) comportant au moins une extrémité fonctionnelle (22), les éléments fonctionnels (2) étant orientés essentiellement perpendiculairement au champ d'action (5) dans une direction Z, et le dispositif (1) comportant au moins une unité à basculement (8) permettant de retenir, de façon à pouvoir basculer, les éléments fonctionnels (2), au moins au nombre de un, **caractérisé en ce que** l'unité à basculement (8) comporte des actionneurs (10) permettant l'orientation individuelle des extrémités fonctionnelles (22) de ces éléments fonctionnels (2) par rapport à un axe Z (11) qui est perpendiculaire au champ d'action (5), et une unité de commande (17) permettant la commande électrique de ces actionneurs (10), chacun des éléments fonctionnels (2) étant de ce fait exécuté de façon à basculer individuellement et indépendamment des orientations X et Y du champ d'action.

2. Dispositif (1) selon la revendication 1, **caractérisé en ce qu'**il est fixé à un bras robotisé (6) qui est exécuté pour déplacer l'élément fonctionnel (2) dans au moins une zone partielle (7) du champ d'action (5) et au moins dans la direction Z, l'unité de commande (17) étant alors exécutée pour coordonner la commande de déplacement du bras robotisé (6) et la modification de position des extrémités fonctionnelles (22) de ces éléments fonctionnels (2) par rapport à un axe Z (11) perpendiculaire au champ d'action (5).

3. Dispositif (1) selon la revendication 1 ou 2, **caractérisé en ce que** les actionneurs (10) de l'unité à basculement (8) sont exécutés pour agir sur une tige (12) de l'élément fonctionnel (2) et/ou sur des éléments de direction (13,13') reliés à l'élément fonctionnel (2).

4. Dispositif (1) selon la revendication 3, **caractérisé en ce que** les actionneurs (10) de l'unité à basculement (8) sont disposés pour agir dans au moins un plan (14,14') orienté essentiellement horizontalement et essentiellement perpendiculairement l'un à l'autre sur la tige (12) d'un élément fonctionnel (2).

5. Dispositif (1) selon la revendication 4, **caractérisé en ce que** l'unité à basculement (8) comporte une articulation (9) qui est disposée - de préférence symétriquement - entre les plans (14,14').

6. Dispositif (1) selon la revendication 3, **caractérisé en ce que** les actionneurs (10) de l'unité à basculement (8) sont orientés essentiellement verticalement et sont disposés pour agir essentiellement dans la direction Z sur les éléments de direction (13,13') reliés à un élément fonctionnel (2).

7. Dispositif (1) selon la revendication 6, **caractérisé en ce que** les actionneurs (10) de l'unité à basculement (8) sont disposés dans deux plans (15,15') perpendiculaires l'un à l'autre et orientés essentiellement verticalement.

8. Dispositif (1) selon la revendication 7, **caractérisé en ce que** les plans (15,15') sont disposés parallèlement à la direction X ou parallèlement à la direction Y du champ d'action (5).

9. Dispositif (1) selon l'une des revendications 6 à 8, **caractérisé en ce que** l'unité à basculement (8) comporte une articulation (9) qui est disposée - de préférence symétriquement - à la hauteur des éléments de direction (13,13').

10. Dispositif (1) selon l'une des revendications précédentes, **caractérisé en ce que** tous les actionneurs (10) sont exécutés comme des piézoéléments, deux actionneurs (10) respectifs formant une paire fonctionnelle à action mutuellement opposée.

11. Dispositif (1) selon l'une des revendications 1 à 9, **caractérisé en ce qu'**un actionneur (10) exécuté comme un piézoélément et un élément élastique passif (16) forment toujours une paire fonctionnelle à action mutuellement opposée.

12. Dispositif (1) selon l'une des revendications précédentes, **caractérisé en ce que** ces éléments fonctionnels (2) sont exécutés comme des pointes de pipette, comme des pointes de distributeur (20) ou comme des palpeurs (21).

13. Système (3) destiné à travailler avec des échantillons de fluide (4), dans lequel le système (3) comporte un champ d'action (5) essentiellement horizontal, qui s'étend dans une direction X et dans une direction Y qui lui est essentiellement perpendiculaire, **caractérisé en ce que** le système (3) comporte au moins un dispositif (1) selon l'une des revendications 1 à 12.

14. Système (3) selon la revendication 13, qui comporte un champ d'action horizontal (5) ayant une extension longitudinale (X) et une extension transversale (Y) qui lui est essentiellement perpendiculaire, ainsi qu'au moins un bras robotisé (6), qui est aussi exécuté pour réaliser des déplacements dans la direction X et/ou Y, **caractérisé en ce que** les actionneurs (10) de l'unité à basculement (8) sont disposés parallèlement à la direction X et/ou parallèlement à la direction Y du champ d'action (5).

15. Système (3) selon la revendication 14, **caractérisé en ce que** contre le bras robotisé (6) est disposé de façon mobile un nombre pair de dispositifs (1), de préférence par groupes de quatre.

16. Système (3) selon la revendication 14, **caractérisé en ce que** chaque groupe de quatre dispositifs (1) est exécuté en tant qu'unité de quatre (18), mobiles conjointement au niveau du bras robotisé (6).

17. Système (3) selon la revendication 14, **caractérisé en ce que** les éléments fonctionnels (2) de chaque unité de quatre (18) sont disposés symétriquement par rapport à leur centre (19), avec un écartement petit, moyen ou grand.

18. Utilisation d'un dispositif (1) selon l'une des revendications 1 à 12 dans un système (3) destiné à travailler avec des échantillons de fluide (4), qui comporte un champ d'action (5) essentiellement horizontal, qui s'étend dans une direction X et dans une direction Y qui lui est perpendiculaire, lequel dispositif (1) comporte au moins un élément fonctionnel (2) présentant au moins une extrémité fonctionnelle (22), les éléments fonctionnels (2) étant orientés essentiellement perpendiculairement au champ d'action (5) dans une direction Z, et le dispositif (1) comportant au moins une unité à basculement (8) permettant de retenir, de façon à pouvoir basculer, les éléments fonctionnels (2), au moins au nombre de un, **caractérisée en ce qu'**au moins un actionneur (10) d'une unité à basculement (8) de ce dispositif (1) est commandé par voie électrique par une unité de commande (17), suite à quoi les actionneurs activés (10) agissent sur cet élément fonctionnel (2) de façon telle que la position de l'extrémité fonctionnelle (22) de cet élément fonctionnel (2) est modifiée par rapport à un axe Z qui est perpendiculaire au champ d'action (5) individuellement et indépendamment des orientations X et Y du champ d'action.

19. Utilisation d'un système (3) selon une ou plusieurs des revendications 13 à 17 pour travailler avec des échantillons de fluide (4), dans laquelle le système (3) comporte un champ d'action (5) essentiellement horizontal, au moins un bras robotisé (6) ayant une commande coordonnée et au moins un dispositif (1) selon l'une des revendications 1 à 12 avec un élément fonctionnel orienté essentiellement perpendiculairement au champ d'action (5) dans une direction Z, le bras robotisé (6) étant exécuté pour déplacer l'élément fonctionnel (2) dans au moins une zone partielle (7) du champ d'action (5) et au moins dans la direction Z, **caractérisée en ce qu'**au moins un actionneur (10) d'une unité à basculement (8) de ce dispositif (1) est commandé par voie électrique par une unité de commande (17), suite à quoi les actionneurs activés (10) agissent sur cet élément fonctionnel (2) de façon à ce que la position de l'extrémité fonctionnelle (22) de cet élément fonctionnel (2) soit modifiée par rapport à un axe Z perpendiculaire au champ d'action (5) individuellement et indépendamment des axes de déplacement du bras robotisé (6).

20. Utilisation selon l'une des revendications 18 ou 19, **caractérisée en ce que** le basculement de tous les éléments fonctionnels (2) portés par un ou par deux bras robotisés (6) est coordonné, suite à quoi l'unité de commande (17) est exécutée pour coordonner la commande de déplacement des bras robotisés (6) et la modification de position des extrémités fonctionnelles (22) de ces éléments fonctionnels (2) par rapport à un axe Z (11) perpendiculaire au champ d'action (5).

21. Utilisation selon l'une des revendications 18 à 20, dans laquelle ces éléments fonctionnels (2) sont exécutés en tant que pointes de pipette ou pointes de distributeur (20) ou en tant que palpeurs (21), **caractérisée en ce que** les extrémités fonctionnelles (22) de ces éléments fonctionnels (2) sont disposées en une matrice (23) ou selon une figure géométrique (24) quelconque.

22. Utilisation selon l'une des revendications 18 à 20, dans laquelle ces éléments fonctionnels (2) sont exécutés en tant que pointes de pipette ou pointes de distributeur (20) ou en tant que palpeurs (21), **caractérisée en ce que** les extrémités fonctionnelles (22) de ces éléments fonctionnels (2) adoptent une répartition géométrique qui correspond à la disposition de conteneurs de fluide ou d'ouvertures de remplissage déterminés.
